# EUROPÄISCHE PATENTSCHRIFT

(11) **EP 0 968 039 B1**
(45) Veröffentlichungstag und Bekanntmachung des Hinweises auf die Patenterteilung: **16.10.2002**
(21) Anmeldenummer: 98907968.6
(22) Anmeldetag: 21.01.1998
(51) Int. Cl.: B01D 29/48, B01D 29/66

(54) **RÜCKSPÜLFILTERVORRICHTUNG**
BACKWASH FILTERING DEVICE
DISPOSITIF DE FILTRATION AVEC LAVAGE A CONTRE-COURANT

(30) Priorität: 20.03.1997 DE 19711589
(43) Veröffentlichungstag der Anmeldung: 05.01.2000
(73) Patentinhaber: Hydac Process Technology GmbH, 66538 Neunkirchen (DE)
(72) Erfinder: TECKENTRUP, Heinrich, D-66123 Saarbrücken (DE); WNUK, Ralf, D-66450 Bexbach (DE); LANG, Norbert, D-66440 Blieskastel (DE)
(74) Vertreter: Bartels, Martin Erich Arthur
(86) Internationale Anmeldenummer: EP9800310
(87) Internationale Veröffentlichungsnummer: WO98042426

(56) Entgegenhaltungen:
- DE-A- 4 030 084
- DE-U- 8 306 970
- US-A- 2 237 964

## Beschreibung

Die Erfindung betrifft eine Rückspülfiltervorrichtung für den Einsatz von Spaltsiebrohrfilterelementen, die in einem Gehäuse mit einem Filtereinlaß und einem Auslaß für das zu filtrierende Fluid aufnehmbar sind, wobei die Filterelemente für eine Filtration oder Rückspülung in beiden Richtungen durchströmbar sind und wobei für die Rückspülung ein antreibbarer Spülarm vorgesehen ist, der einen Fluidaustritt für verschmutztes Fluid aufweist und der nacheinander unter die Durchlaßquerschnitte der Filterelemente verfahrbar ist.

Eine dahingehende gattungsgemäße Rückspülvorrichtung ist durch die DE 40 30 084 A1 bekannt. Bei der bekannten Rückspülvorrichtung, die mit der zu filtrierenden Schmutzflüssigkeit rückgespült werden kann, vorzugsweise im Gegenstrom zur Filtrierrichtung, weist diese im Filtergehäuse eine Vielzahl an Filterzellen in kreisförmiger Anordnung auf, die mit Hilfe eines von einem Drehantrieb angetriebenen Spülarmes einzeln oder in kleinen Gruppen zur Rückspülung mit dem Schlammablauf verbunden werden können. Obwohl bei der bekannten Anordnung beim Rückspülvorgang die Schmutzflüssigkeit die Filterzellen mit hoher turbulenter Geschwindigkeit in Längsrichtung durchströmt und dabei die abgelagerten Schmutzstoffe löst und abführt, ist das Filtrier- und Rückspülergebnis verbesserbar.

Da die zylindrischen Filterelemente bei der bekannten Lösung im Filtergehäuse dicht nebeneinanderstehend angeordnet sind, ist der freie Ausströmraum im Filtergehäuse entsprechend klein, so daß im normalen Filtrierbetrieb durch die gegenseitige Beeinflussung der zylindrischen Fitterelemente zueinander der Ausströmwiderstand für das filtrierte Fluid erhöht ist und mithin auch die Druckdifferenz zwischen Filtereinlaß und -auslaß. Dies führt jedoch zu einer insgesamt schlechten Energiebilanz für die bekannte beschriebene Anordnung. Selbst wenn, wie in der DE 83 06 970 U beschrieben, die zylindrischen Filterelemente in einem deutlichen Abstand zueinander innerhalb des Filtergehäuses angeordnet sind, entsteht insbesondere beim Rückspülen dieser zylindrischen Filterelemente ein nicht gleichförmiger Flüssigkeitsstrom mit der Folge, daß die Fluidgeschwindigkeit innerhalb der zylindrischen Elemente ständig zunimmt, was sich ebenfalls ungünstig auf die Energiebilanz der gesamten Rückspülvorrichtung auswirkt.

Durch die DE 38 12 876 A1 ist ein konisches Filterelement bekannt, das dem Filtern und Abscheiden unterschiedlicher Substanzen und Partikel dient, wobei ein konisch gewundener Draht in der Form einer Spirale oder eines wendelförmigen Kegels innerhalb von aufeinander zulaufenden Stützstäben geführt ist. Durch die gedrungene konische Bauform, bei der das Längen-Breiten-Verhältnis im Bereich von 1 ist, ist eine Art Trichtereffekt erzeugt, der die Abscheideleistung erhöhen soll. Selbst, wenn man das dahingehende konische Filter- und Abscheideelement in einer Rückspülvorrichtung einsetzen würde, würde jedenfalls derart kein größerer Austrittsquerschnitt für das Fluid gegenüber dem durch die Filterfläche gebildeten Eintrittsquerschnitt erreicht werden und somit treten erhöhte Strömungswiderstände auf, die insbesondere beim Rückspülen den Wirkungsgrad beeinträchtigen. Eine hierzu vergleichbare Vorrichtung ist auch durch die US-A-2,237,964 bekannt.

Ausgehend von diesem Stand der Technik liegt der Erfindung die Aufgabe zugrunde eine Rückspülvorrichtung zu schaffen mit verbesserter Filtrierund Rückspülleistung und verbesserter Energiebilanz beim Durchströmen des jeweiligen Filterelementes mit dem Fluid. Eine dahingehende Aufgabe löst eine Rückspülfiltervorrichtung mit den Merkmalen des Anspruches 1.

Dadurch, daß gemäß dem kennzeichnenden Teil des Anspruches 1 zumindest ein Teil der eingesetzen Spaltsiebrohrfilterelemente konisch ausgebildet ist und daß die Baulänge der konischen Filterelemente mindestens 10mal größer ist als der größte vorhandene Durchlaßquerschnitt für das Fluid, ist der Abstand zwischen den einzelnen konischen Spaltsiebrohrfilterelementen oder zwischen diesen und den zylindrischen vergrößert mit der Folge, daß auch der Ausströmraum im Filtergehäuse vergrößert und mithin der Abströmwiderstand im Filterbetrieb erniedrigt ist. Beim Rückspülen ist das konische Spaltsiebrohrfilterelement gegenüber einem zylindrischen eindeutig im Vorteil. Ursache hierfür ist in erster Linie der relativ größere Austrittsquerschnitt der konischen Filterelemente gegenüber zylindrischen bei gleicher Filteroberfläche. Da der Austrittsquerschnitt bei den konischen Filterelementen gegenüber dem durch die Filteroberfläche gebildeten Eintrittsquerschnitt, also der freien Elementfläche, jedoch relativ klein ist, bildet sich hier abhängig von der Größe des Strömungswiderstandes des Spaltrohres ein Engpaß, indem ein großer Teil des Systemdrucks abfällt. Es treten also geringere Druckverluste auf, was energetisch beim Rückspülen günstiger ist.

Beim Rückspülen wird ein Großteil des Volumendurchsatzes bei konischen und zylindrischen Filterelementen grundsätzlich am unteren Filterende erzielt. Die Volumenströme nehmen dann sehr schnell ab. Da das konische Element wesentlich weiter zurückgespült wird, ist zusätzlich der Geschwindigkeitsgradient geringer, so daß unter Einbeziehung der Geschwindigkeitsprofile bezogen auf die Filteroberfläche sich aufgrund der Elementkonizität ein zusätzlicher Reinigungseffekt gegenüber zylindrischen Elementen ergibt. Durch die erreichte im wesentlichen konstante Geschwindigkeit bei der Abreinigung der konischen Filterelemente erfolgt dies schonend, was die Standzeit dahingehender Filterelemente verlängert.

Beim Rückspülen werden vorzugsweise alle Filterelemente nacheinander regeneriert. Während der Rückspülung einzelner Elemente wird die Filtration über die restlichen Spaltrohre fortgesetzt, so daß der Filtrationsbetrieb zu keiner Zeit unterbrochen wird. Der in der Rückspülfiltervorrichtung anstehende Überdruck läßt während der Rückspülphase einen geringen Teilstrom des Filtrates das zu reinigende Element in umgekehrter Richtung durchströmen, wobei der Schmutz vom Element abgelöst und ausgetragen wird.

Um die Wirkung der dahingehenden Rückspülung weiter zu verstärken, kann dies impulsunterstützt erfolgen, wobei der Spülarm jeweils wenige Sekunden unter dem Filterelement an seinem Durchlaßquerschnitt verweilt. Hierbei findet ein schnelles Öffnen der Rückspülarmatur statt, wobei ein Druckimpuls in der Öffnung des Spaltrohres entsteht, der auch hartnäckige Verschmutzungen entfernt.

Weitere vorteilhafte Ausgestaltungen der Erfindung sind Gegenstand der Unteransprüche.

Im folgenden wird die erfindungsgemäße Anordnung in der Zeichnung näher erläutert.
Es zeigen in prinzipieller und nicht maßstäblicher Darstellung die
- Fig.1a: in teilweise aufgeschnittener Form eine Seitenansicht auf das Spaltsiebrohrfilterelement;
- Fig.1b: einen Schnitt längs der Linie I-I in Fig. 1a;
- Fig. 1c: in vergrößerter Darstellung eine in Fig. 1a mit "X" bezeichnete Einzelheit;
- Fig.2: einen Längsschnitt durch eine Rückspülfiltervorrichtung mit zylindrischen und konisch zulaufenden Spaltsiebrohrfilterelementen.

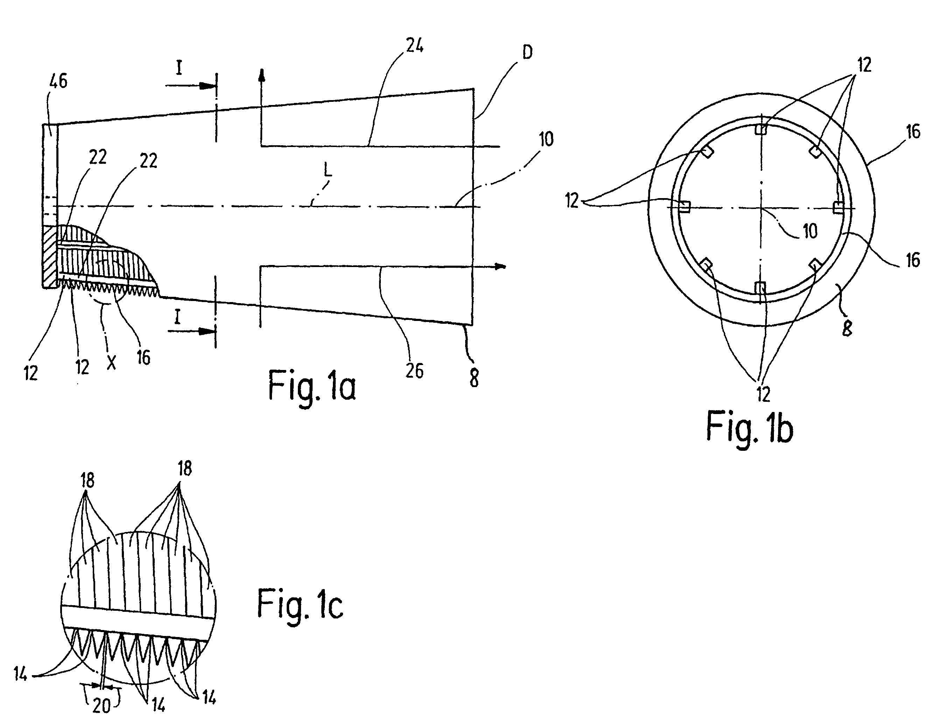

Das in der Fig. 1a in Seitendarstellung gezeigte Spaltsiebrohrfilterelement 8 weist in Richtung seiner Längsachse 10 auf diese zugeneigt Stützstäbe 12 auf, um die unter Freilassen von durch ein Fluid passierbaren Spalten 14 ein Drahtprofil 16 in einzelnen Windungen 18 gewickelt ist, wobei im Bereich einer jeden Berührstelle des Drahtprofils 16 mit dem Stützstab 12 ein Schweißpunkt angeordnet ist. Die für den freien Fluiddurchtritt vorgesehene Spaltgröße, also der Abstand zwischen zwei Spalten 14, ist in der Fig.1c mit aufeinander zugewandten Pfeilen 20 dargestellt.

Wie insbesondere die Fig. 1a zeigt, ist der jeweilige Stützstab 12 mit seinem einen Ende 22 derart auf die Längsachse 10 zugeneigt, daß ein insgesamt konisch zulaufendes Filterelement 8 gebildet ist, wobei die Windungen 18 des Drahtprofils 16 dabei sich im Durchmesser in Richtung der geneigten Enden 22 der Stützstäbe 12 verringern, was sich auch aus der Darstellung nach der Fig.1b ergibt. Anstelle eines einzigen Drahtprofils 16, wie in den Figuren dargestellt, können gegebenenfalls auch mehrere hintereinander angeordnete Drahtprofile oder übereinander angeordnete und aufgewickelte Drahtprofile (nicht dargestellt) eingesetzt werden, sofern dies für die angegebene Filtrationsaufgabe notwendig ist. Die in Richtung der Längsachse 10 gemessene Länge L des Spaltsiebrohrfilterelementes 8 ist ca. 11 mal größer als der größte vorhandene Durchlaßquerschnitt D für das Fluid am in Blickrichtung auf die Fig.1a gesehenen rechten Ende des Filterelementes 8.

Die Stützstäbe 12 und das Drahtprofil 16 bestehen aus Edelstahl, wobei die Stützstäbe 12 im Querschnitt quadratisch und das Drahtprofil 16 dreieckförmig ist. Die auszuwählenden Spaltweiten, die in der Fig. 1c mit einem Doppelpfeil 20 gekennzeichnet sind, sind an die Größe der abzufiltrierenden Feststeile aus dem Fluid, insbesondere in Form von Hydrauliköl, anzupassen, wobei das filtrierte Fluid frei durch die Spalten 14 tritt und die abfiltrierten Festteile oder Schmutzteile von den Windungen 18 des Drahtprofils 16 zurückgehalten innerhalb des Filterelementes 8 verbleiben oder sich partiell in den Spalten 14 festsetzen mit der Folge, daß mit zunehmender Einsatzdauer des Spaltsiebrohrfilterelementes 8 dieses sich immer mehr zusetzt und für das Durchführen einer Filtration nicht mehr eingesetzt werden kann. In einem dahingehenden Fall ist in umgekehrter Fluiddurchtrittsrichtung das Filterelement 8 durch Rückspülen abzureinigen. In der Fig.1a ist in prinzipieller Darstellung die Filtrationsrichtung von innen nach außen mit einem Pfeil 24 gekennzeichnet und die entgegengesetzte Rückspülrichtung mit einem Pfeil 26.

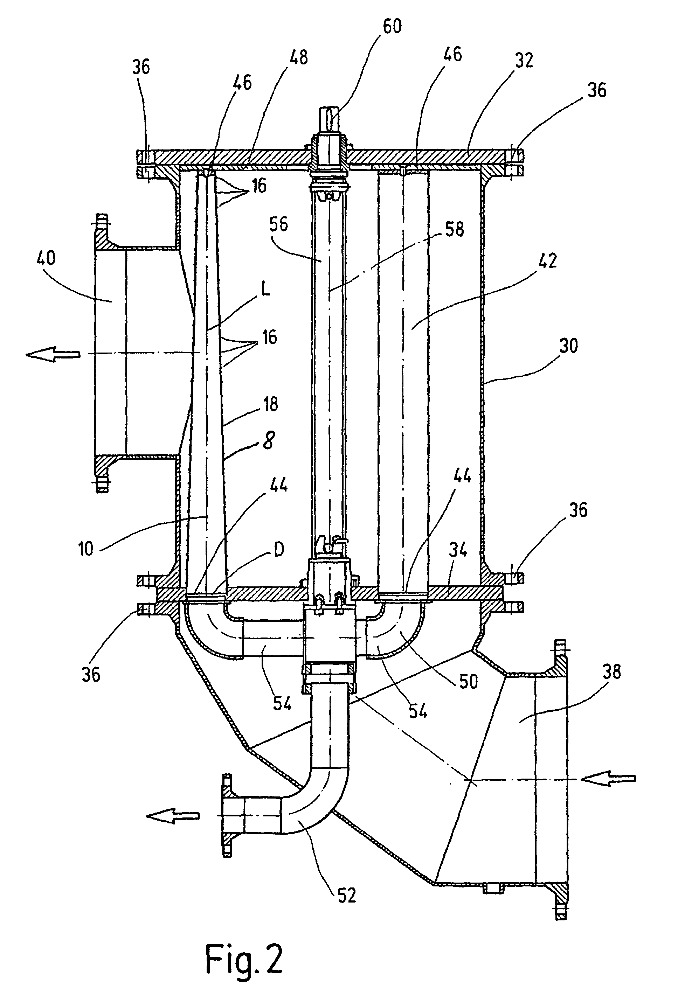

Im folgenden wird die Funktion und der Einsatz des vorgeschriebenen Spaltsiebrohrfilterelementes anhand einer Rückspülfiltervorrichtung nach der Fig.2 aufgezeigt.

Die in Fig.2 gezeigte Rückspülfiltervorrichtung weist ein zylindrisches Gehäuse 30 auf mit Abschlußdeckeln 32,34, die über Flanschverbindungen 36 an dem Filtergehäuse 30 festlegbar sind. Das Gehäuse 10 der Rückspülfiltervorrichtung weist einen Filtereinlaß 38 auf für das zu filtrierende Fluid sowie einen Filterauslaß 40 für das filtrierte Fluid. Die Fluidrichtung im Filtrierbetrieb durch das Gehäuse 30 ist in der Fig.2 mit entsprechenden Pfeilen am Filtereinlaß 38 und Filterauslaß 40 angegeben. Neben den in Blickrichtung auf Fig.2 gesehen links angeordneten konischen Filterelementen 8 sind auch zylindrische Filterelemente 42 im Einsatz. Sowohl die konischen Spaltsiebrohrfilterelemente 8 als auch die zylindrischen Spaltsiebrohrfilterelemente 42 sind in Gruppen unterteilt in Abständen voneinander mehrfach entlang von zylindrischen Kreisbögen innerhalb des Filtergehäuses 30 angeordnet. Alle in der Fig.2 dargestellten Filterelemente münden mit ihrem Einlaßquerschnitt D, also mit ihrer freien Öffnung, in zylindrische Ausnehmungen 44 des unteren Abschlußdeckels 34. An ihrem jeweils anderen gegenüberliegenden Ende sind die zum Einsatz kommenden konischen und zylindrischen Filterelemente 8 bzw. 42 mit Abschlußkappen 46 versehen, mit der jeweils das Ende eines Drahtprofils 16 verschweißt ist und über die die Filterelemente an einem plattenförmigen Zwischenstück 48 gehalten sind, an das von oben her der obere Abschlußdeckel 32 stößt.

Für die eigentliche Rückspülung der Rückspülfiltervorrichtung ist ein antreibbarer Spülarm 50 vorgesehen, der auf seiner Unterseite einen Anschluß in Form eines Fluidaustrittes 52 für verschmutztes Fluid vorsieht. Der in seiner Länge zwei unterschiedliche Armabschnitte 54 aufweisende Spülarm 50 läßt sich über ein Antriebsgestänge 56 nacheinander unter die Durchlaßquerschnitte D der konischen und der zylindrischen Filterelemente 8 bzw. 42 verfahren. Die Rückspülung erfolgt also kontinuierlich mit dem eigentlichen Filtrationsvorgang, wobei nur die Filterelemente 8,42 rückgespült werden, und zwar von außen nach innen, mit dem gereinigten, bei der Filtration mit dem sonstigen Filterelementen entstehenden filtrierten Fluid, deren freie Durchlaßquerschnitte D von den Armabschnitten 54 des Spülarmes 50 untergriffen sind.

Die Austrittsrichtung des derart verschmutzten, bei der Rückspülung entstehenden Fluids ist in der Fig.2 mit einem Pfeil am Fluidaustritt 52 dargestellt. Das Antriebgestänge 56 durchgreift entlang der Längsachse 58 der Rückspülfiltervorrichtung das Filtergehäuse 30 und durchgreift sowohl den oberen Abschlußdekkel 32 als auch den unteren Abschlußdeckel 34. Für einen Antrieb des Antriebsgestänges 56, insbesondere in Form einer Hohlwelle, ist am oberen Abschlußdeckel 32 eine Keilwellenverbindung 60 vorgesehen, über die sich das Antriebsgestänge mit einem Motor od.dgl. für einen drehenden Umlauf um die Längsachse 56 antreiben läßt.

Wie des weiteren die Fig.2 zeigt, ist der Filtereinlaß 38 von seiner Wandung her in der Art eines Diffusors ausgebildet, der die Fluideintrittsgeschwindigkeit des zu filtrierenden verschmutzten Fluids reduziert bei gleichzeitigter Druckerhöhung an den durch den Spülarm 50 freigelassenen Durchlaßquerschnitten D der konischen und der zylindrischen Filterelemente 8 bzw. 42. Die Diffusorwirkung wird insbesondere dadurch begünstigt, daß die Eintrittsquerschnitte am Filtereinlaß 38 als auch der Querschnitt des Aufnahmeraumes für die Filterelemente 8 und 42 im wesentlichen gleich ausgebildet ist und der Übergang zwischen Filtereinlaß 38 und Aufnahmeraum im wesentlichen gleichförmig ohne Querschnittsreduzierung erfolgt.

Durch den konischen Aufbau der Spaltsiebrohrfilterelemente 8 wird erreicht, daß die Durchlaßfläche D im jeweiligen Element sehr groß ist, wobei der Abstand sowohl zwischen den konischen Elementen 8 als auch zwischen diesen und den zylindrischen Elementen 42 sich in Richtung des Filterauslasses 40 vergrößert, so daß dem filtrierten Fluid beim Austritt aus dem Innenraum des jeweiligen Filterelementes ein kleinerer Widerstand entgegengesetzt wird gegenüber den herkömmlichen Lösungen mit ausschließlich zylindrischen Elementen mit der Folge, daß sich energiegünstig das Verhältnis Δp der gesamten Rückspülfiltervorrichtung verringert. Des weiteren ist durch den konischen Aufbau der Spaltsiebrohrfilterelemente 8 ein konstanter Flüssigkeitsstrom beim Rückspülen der Elemente erreicht, wohingegen bei zylindrischen Elementen 42, die in der vorliegenden Ausführungsform ebenfalls zum Einsatz kommen, die Geschwindigkeit in Längsrichtung desselben energetisch ungünstig ständig zunimmt.

## Patentansprüche

1. Rückspülvorrichtung für den Einsatz von Spaltsiebrohrfilterelementen (8,42), die in einem Gehäuse (30) mit einem Filtereinlaß (38) und einem Auslaß (40) für das zu filtrierende Fluid aufnehmbar sind, wobei die Filterelemente (8,42) für eine Filtration (24) oder Rückspülung (26) in beiden Richtungen durchströmbar sind und wobei für die Rückspülung (26) ein antreibbarer Spülarm (50) vorgesehen ist, der einen Fluidaustritt (52) für verschmutztes Fluid aufweist und der nacheinander unter die Durchlaßquerschnitte (D) der Filterelemente (8,42) verfahrbar ist, **dadurch gekennzeichnet, daß** zumindest ein Teil der eingesetzten Spaltsiebrohrfilterelemente (8) konisch ausgebildet ist und daß die Baulänge (L) der konischen Filterelemente (8) mindestens 10mal größer ist als der größte vorhandene Durchlaßquerschnitt (D) für das Fluid.

2. Rückspülfiltervorrichtung nach Anspruch 1, **dadurch gekennzeichnet, daß** das jeweilige konische Spaltsiebrohrfilterelement (8) bei einer Rückspülung (26) gegenüber einem zylindrischen Filterelement (42) gleicher Filterfläche relativ gesehen den größeren Durchlaßquerschnitt (D) für das Fluid aufweist.

3. Rückspülfiltervorrichtung nach Anspruch 1 oder 2, **dadurch gekennzeichnet, daß** die Baulänge (L) der konischen Filterelemente 11mal größer ist als der größte vorhandene Durchlaßquerschnitt (D) für das Fluid.

4. Rückspülfiltervorrichtung nach einem der Ansprüche 1 bis 3, **dadurch gekennzeichnet, daß** alle eingesetzten Spaltsiebrohrfilterelemente (8) konisch ausgebildet sind.

5. Rückspülfiltervorrichtung nach einem der Ansprüche 1 bis 4, **dadurch gekennzeichnet, daß** die Spaltsiebrohrfilterelemente (8) Stützstäbe (12) aufweisen, um die unter Freilassen von durch ein Fluid passierbaren Spalten (14) mindestens ein Drahtprofil (16) in einzelnen Windungen (18) gewickelt ist, das zumindest teilweise mit den Stützstäben (12) verschweißt ist.

6. Rückspülfiltervorrichtung nach Anspruch 5, **dadurch gekennzeichnet, daß** der jeweilige Stützstab (12) mit seinem einen Ende (22) derart auf die Längsachse (10) des Spaltsiebrohrfilterelementes (8) zugeneigt ist, daß das konisch zulaufende Filterelement (8) gebildet ist, und daß die Windungen (12) des jeweiligen Drahtprofils (16) dabei sich im Durchmesser in Richtung der geneigten Enden (22) der Stützstäbe (12) verringern.

7. Rückspülfiltervorrichtung nach Anspruch 5 oder 6, **dadurch gekennzeichnet, daß** die Stützstäbe (12) und das jeweilige Drahtprofil (16) aus einem Metallwerkstoff, insbesondere aus Edelstahl oder Kunststoffmaterialien, gebildet ist.

8. Rückspülfiltervorrichtung nach einem der Ansprüche 5 bis 7, **dadurch gekennzeichnet, daß** die Stützstäbe (12) im Querschitt quadratisch und das Drahtprofil (16) dreieckförmig ist.

9. Rückspülfiltervorrichtung nach einem der Ansprüche 1 bis 8, **dadurch gekennzeichnet, daß** die Spaltweiten (20) an die Größe der abzufiltrierenden Festteile des Fluids angepaßt sind.

10. Rückspülfiltervorrichtung nach Anspruch 9, **dadurch gekennzeichnet, daß** im Bereich einer jeden Berührstelle des Drahtprofils (16) mit dem Stützstab (12) ein Schweißpunkt angeordnet ist.

11. Rückspülfiltervorrichtung nach einem der Ansprüche 1 bis 10, **dadurch gekennzeichnet, daß** die Spaltsiebrohrfilterelemente (8) derart im Gehäuse (30) angeordnet sind, daß sie mit ihrem konisch zulaufenden Ende in Richtung des Filtergehäuseauslasses (40) weisen.

## Claims

1. Backwash filtering device using tubular wedge-wired screen elements (8, 42) which can be accommodated in a casing (30) with a filter inlet (38) and an outlet (40) for the liquid which is to be filtered, whereby the liquid can flow through screen elements (8, 42) in both directions for filtering (24) or backwashing (flushing) (26) and whereby an actuatable control arm (50) is provided for backwashing, the said arm having an outlet (52) for contaminated fluid and being movable under the successive passage cross sections (D) of the screen elements (8, 42), **characterised in that** at least part of the tubular wedge-wired filter elements (8) is conical and that the length (L) of the conical filter elements (8) is at least 10 times greater than the largest through-flow cross section (D) available for the fluid.

2. Backwash filtering device as in Claim 1, **characterised in that** the respective conical tubular wedge-wired filter element (8) has in backwashing (26 ) a relatively greater through-flow cross section (D) for the fluid than a cylindrical filter element (42) with the same filtering surface.

3. Backwash filtering device according to Claim 1 or 2, **characterised in that** the length (L) of the conical filter elements is 11 times greater than the largest through-flow cross section (D) available for the fluid.

4. Backwash filtering device according to one of the Claims 1 to 3, **characterised in that** all tubular wedge-wired screen elements (8) used are of conical design.

5. Backwash filtering device according to one of the Claims 1 to 4, **characterised in that** the tubular wedge-wired screen elements (8) have supporting rods (12) around which at least one wire profile (16) is wound in single windings (18) while leaving open gaps (14) through which fluid can pass, the said wire profile (16) being welded to the supporting rods (12) at least in part.

6. Backwash filtering device according to Claim 5, **characterised in that** the respective supporting rod (12) is inclined with one end (22) to the longitudinal axis (10) of the tubular wedge-wired filter element (8) to form the conical filter element (8) and that at the same time the windings (12) of the respective wire profile (16) are reducing in diameter in the direction of the inclined ends (22) of the supporting rods (12).

7. Backwash filtering device according to Claim 5 or 6, **characterised in that** the supporting rods (12) and the respective wire profile (16) are made of a metallic material, in particular stainless steel or plastic materials.

8. Backwash filtering device according to one of the Claims 5 to 7, **characterised in that** the supporting rods (12) have a square cross section and the wire profile has a triangular cross section.

9. Backwash filtering device according to one of the Claims 1 to 8, **characterised in that** the size of the gaps (20) are suited to the size of the solids to be removed from the fluid.

10. Backwash filtering device according to claim 9, **characterised in that** a weld is arranged in the area of each point of contact between the wire profile (16) and the supporting rod (12).

11. Back wash filtering device according to one of the Claims 1 to 10, **characterised in that** the tubular wedge-wired filter elements (8) are arranged in the casing in such a way that their conically tapering end points in the direction of the filter casing outlet (40).

## Revendications

1. Dispositif de rétrolavage pour la mise en oeuvre d'éléments filtrants de tuyau à tamis à fentes (8, 42) qui peuvent être reçus dans un carter (30) avec une entrée de filtre (38) et une sortie (40) pour le fluide à filtrer, dans lequel les éléments filtrants (8, 42) peuvent être traversés dans les deux sens pour un filtrage (24) ou un rétrolavage (26), et dans lequel, pour le rétrolavage (26), un bras de lavage actionnable (50) est prévu qui présente un dégagement de fluide (52) pour un fluide pollué et qui peut être déplacé consécutivement sous les sections de passage (D) des éléments filtrants (8, 42), **caractérisé en ce qu'**au moins une partie des éléments filtrants de tuyau à tamis à fentes (8) est réalisée de forme conique, et **en ce que** la longueur hors tout (L) des éléments filtrants coniques (8) est au moins 10 fois plus grande que la plus grande section de passage (D) existant pour le fluide.

2. Dispositif de filtrage par rétrolavage selon la revendication 1, **caractérisé en ce que**, lors d'un rétrolavage (26), l'élément filtrant de tuyau à tamis à fentes (8) conique respectif présente la section de passage (D) pour le fluide relativement plus grande par rapport à un élément filtrant cylindrique (42) de même surface de filtre.

3. Dispositif de filtrage par rétrolavage selon la revendication 1 ou 2, **caractérisé en ce que** la longueur hors tout (L) des éléments filtrants coniques est 11 fois plus grande que la plus grande section de passage (D) existant pour le fluide.

4. Dispositif de filtrage par rétrolavage selon l'une quelconque des revendications 1 à 3, **caractérisé en ce que** tous les éléments filtrants de tuyau à tamis à fentes (8) mis en oeuvre sont réalisés de façon conique.

5. Dispositif de filtrage par rétrolavage selon l'une quelconque des revendications 1 à 4, **caractérisé en ce que** les éléments filtrants de tuyau à tamis à fentes (8) présentent des tiges de support (12) autour desquelles au moins un profil de fil métallique (16) est enroulé par spires individuelles (18), en réservant des fentes (14) par lesquelles peut passer un fluide, le profil étant soudé au moins partiellement aux tiges de support (12).

6. Dispositif de filtrage par rétrolavage selon la revendication 5, **caractérisé en ce que** la tige de support (12) respective est inclinée avec l'une de ses extrémités (22) vers l'axe longitudinal (10) de l'élément filtrant de tuyau à tamis à fentes (8) de telle sorte que l'élément filtrant est réalisé en s'amenuisant de façon conique, et **en ce que** le diamètre des spires (12) du profil de fil métallique (16) respectif diminue alors en direction des extrémités inclinées (22) des tiges de support (12).

7. Dispositif de filtrage par rétrolavage selon la revendication 5 ou 6, **caractérisé en ce que** les tiges de support (12) et le profil de fil métallique (16) respectif se composent d'un matériau métallique, en particulier d'acier inoxydable ou de matières plastiques.

8. Dispositif de filtrage par rétrolavage selon l'une quelconque des revendications 5 à 7, **caractérisé en ce que** les tiges de support (12) sont de section carrée et le profil de fil métallique (16) est de forme triangulaire.

9. Dispositif de filtrage par rétrolavage selon l'une quelconque des revendications 1 à 8, **caractérisé en ce que** les largeurs de fente (20) sont adaptées à la taille des matières solides du fluide.

10. Dispositif de filtrage par rétrolavage selon la revendication 9, **caractérisé en ce qu'**au niveau de chaque point de contact entre le profil de fil métallique (16) et la tige de support (12), un point de soudage est agencé.

11. Dispositif de filtrage par rétrolavage selon l'une quelconque des revendications 1 à 10, **caractérisé en ce que** les éléments filtrants de tuyau à tamis à fentes (8) sont agencés dans le carter (30) de telle sorte qu'avec leur extrémité s'amenuisant de façon conique, ils sont orientés en direction de la sortie de carter de filtre (40).
